# EUROPEAN PATENT SPECIFICATION

(11) **EP 3 713 898 B1**
(45) Date of publication and mention of the grant of the patent: **19.03.2025**
(21) Application number: 18803694.1
(22) Date of filing: 20.11.2018
(51) Int. Cl.: C04B 40/06, C09J 125/14, C08L 25/14, C08L 63/00, C04B 111/00

(54) **WATER-BASED 2-COMPONENT COMPOSITION WITH CHEMICAL CURING**
WASSERBASIERTE 2-KOMPONENTIGE ZUSAMMENSETZUNG MIT CHEMISCHER AUSHÄRTUNG
COMPOSITION À 2 COMPOSANTS À BASE D'EAU À DURCISSEMENT CHIMIQUE

(30) Priority: 21.11.2017 EP 17202750
(43) Date of publication of application: 30.09.2020
(73) Proprietor: Sika Technology AG, 6340 Baar (CH)
(72) Inventor: MAIER, Steffen, 5430 Wettingen (CH); LANGNER, Michael, 79771 Klettgau (DE); STAUBER FEDIER, Sara, 8305 Dietlikon (CH)
(74) Representative: Sika Patent Attorneys
(86) International application number: PCT/EP2018/081925
(87) International publication number: WO 2019/101740

(56) References cited:
- DE-A1- 102008 014 526
- US-A1- 2007 224 362
- US-A1- 2011 166 285

## Description

### Technical field

The invention relates to accelerated, two-component water-based cementitious compositions and the use thereof as adhesives, sealants, casts, and coatings.

### Background of the invention

Two-component compositions, based on aqueous dispersions of polymers in a first component A and a hydraulic binder composition in a second component B, are known in the field of sealants and adhesives. These two compositions A and B cure or dry after mixing into elastic adhesives and sealants with high Shore A hardness and good adhesion properties, especially on porous substrates such as concrete.

Such compositions are, for example, described in WO 2014/009298. This disclosure teaches adhesive and/or sealing formulations which are provided as a kit-of-parts comprising, as component B, a hydraulic binder composition being a storage-stable, liquid composition comprising gypsum, Portland cement, aluminate cement or mixtures thereof and an anhydrous liquid which has a boiling point greater than 175°C at 1 atmosphere pressure and, as component A, a liquid polymer composition.

Document DE 10 2008 014526 A1 discloses a reactive resin system which comprises a resin- and a hardener-component, which are separately present before the processing, where the resin component contains a polyorganosiloxane, an epoxy-functional component and a hydraulic binder such as Portland cement or aluminate cement, and the hardener component contains a polyamine and/or polyalkylene polyamine and water.

Document US 2007/224362 A1 discloses a waterborne coating composition including a waterborne epoxy coating with hydraulic cement which may be made, stored and transported as a two-part composition, where each part is a pourable liquid.

Such two-component cementitious water-based compositions have, mainly due to their high content of hydraulic binder such as cement, some inherent drawbacks. A commonly encountered issue are the high viscosity, especially of the hydraulic binder component B, but also of the polymer component A and the mixture of the two components. The high viscosity of components A or B or of the mixture of these two components makes it difficult and cumbersome to obtain a homogeneously mixed mixture. Equally, application of the mixed composition, especially in the form of thin films, is often hindered or difficult to achieve. To solve this problem, high amounts of plasticizers or other inert liquids have to be used, which limits the mechanical properties of the product and often leads to undesired plasticizer migration or poor adhesion properties. Additionally, Shore A hardness of the cured product is usually considerably lower if high amounts of plasticizers are used, which is undesirable for certain applications such as adhesives.

Furthermore, commonly used polymer dispersions in such two-component compositions, such as acrylates, only dry physically by water evaporation and do not form truly chemically cross-linked and cured polymer networks, which would be desirable regarding the mechanical properties and resistance of the cured two-component compositions. Usually employed reactive cross-linkers for polymeric compositions often cannot be used due to the pH of the hydraulic binder, or they lead to poor storage stability in such two-component compositions.

It is thus desirable to obtain a two-component water-based cementitious composition that involves a chemical curing mechanism of the polymers contained therein, thus allowing for better mechanical properties and resistance of the cured two-component composition, and that can be formulated with low plasticizer amounts to avoid plasticizer migration problems and after curing possesses improved mechanical and adhesive properties.

### Summary of the invention

The object of the present invention is to provide a two-component composition that is curable to form an adhesive, sealant, potting, casting, or coating material with good mechanical and adhesive properties, high Shore A hardness, and no plasticizer migration problems, comprising a component **A** containing an aqueous polymer dispersion and a component **B** containing a hydraulic binder mixture, while the curing mechanism involves chemical cross-linking reactions of the polymers contained in the composition, leading to improved mechanical properties and abrasion resistance and a high Shore A hardness.

The composition after mixing of the two components **A** and **B** is especially suitable as an adhesive or for casting or potting applications, but may also be advantageously employed for sealing or coating of joints or surfaces or as dampening material.

Surprisingly, it has been found that dispersing the hydraulic binder of component **B** with or within a functional compound leads to a storage-stable component **B** that can be easily mixed with component **A** comprising an aqueous dispersion of a polymer. Furthermore, the functional compound of component **B** is able to react with the aqueous dispersion of the polymer in component **A,** thus forming a chemically cross-linked polymer product when both components **A** and **B** are mixed. This polymer curing mechanism is surprisingly not hampered by the concomitant hydraulic binder hydration reaction, and both curing mechanisms synergistically lead to superior mechanical and adhesive properties in the cured product and a high Shore A hardness.

According to another aspect of the present invention, a method for sealing a joint, adhering two substrates, casting an object, or coating a surface by using the two-component composition is provided.

### Detailed description of the invention

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" in the present document encompasses on the one hand a collective of chemically uniform macromolecules which nevertheless differ in respect of degree of polymerization, molar mass, and chain length, which collective has been prepared through a polymerization reaction (chain growth addition polymerization, free radical polymerization, polyaddition, polycondensation). On the other hand the term also encompasses derivatives of such a collective of macromolecules from polymerization reactions, in other words compounds which have been obtained by reactions, such as additions or substitutions, for example, of functional groups on existing macromolecules and which may be chemically uniform or chemically non-uniform.

"Molecular weight" of oligomers or polymers is understood in the present document to be the molecular weight average Mₙ (number average), which is typically determined by means of GPC against polystyrene as standard and using tetrahydrofuran as solvent using a styrene-divinylbenzene gel column with porosity of 100 Angstrom, 1000 Angstrom and 10000 Angstrom at 35 °C. The term "cementitious" refers to compositions including hydraulic binding agent such as cement and to the cured products thereof.

The unit term "wt.-%" means percentage by weight, based on the weight of the respective total composition, if not otherwise specified. The terms "weight" and "mass" are used interchangeably throughout this document.

All industrial norms and standard methods mentioned in this document are referring to the respective current versions at the time of filing.

The term "(meth)acrylic" designates methacrylic or acrylic. Accordingly, the term "(meth)acrylate" designates methacrylate or acrylate. Similarly, the term (meth)acrylamide would refer either to acrylamide or to methacrylamide, or mixtures of both, as one skilled in the art would readily understand.

The term "polyacrylate polymer" designates polymers resulting from the free-radical polymerization of two or more (meth)acrylate monomers. Copolymers of the (meth)acrylate monomers and copolymers of (meth)acrylate monomers with other vinyl group containing monomers are also included within the term polyacrylate polymer". The terms "polyacrylate polymer", "polyacrylate" and "acrylate polymer" are used interchangeably.

The term "silane" or "organosilane" refers to compounds which on the one hand have at least one, customarily two or three, hydrolysable groups, preferably alkoxy groups or acyloxy groups, bonded directly to the silicon atom via Si-O bonds, and on the other hand have at least one organic radical bonded directly to the silicon atom via an Si-C bond. Silanes having alkoxy groups or acyloxy groups are also known to the person skilled in the art as organoalkoxy silanes and organoacyloxy silanes, respectively. Correspondingly, the term "silane group" identifies the silicon-containing group bonded to the organic radical of the silane, which is bonded by the Si-C bond to a compound. The silanes and their silane groups have the property of undergoing hydrolysis in the event of contact with moisture. This produces organosilanols, i.e., silicon-organic compounds containing one or more silanol groups (Si-OH groups) and, through subsequent condensation reactions, organosiloxanes, in other words silicon-organic compounds containing one or more siloxane groups (Si-O-Si groups).

The term "silane-functional" identifies compounds which have silane groups. "Silane-functional polymers", accordingly, are polymers, more particularly organic polymers, which have at least one, preferably two or more, e.g., two, silane groups. The silane groups may take the form of side groups or, preferably end groups. Silane-functional polymers are also referred to as silane-terminated polymers (STP). γ-Silane-functional polymers, for example, are polymers in which the Si atom of the silane group is linked to the polymer via a 1,3-propylene bridge.

Compositions comprising a silane-functional polymer are moisture-curing, meaning that in the presence of water or moisture, for example atmospheric moisture or water contained in the composition, the above-described hydrolysis and condensation reactions on the silane groups take place, causing crosslinking of the polymer molecules and curing of the composition. The curing is also referred to as crosslinking.

"Aminosilanes", "isocyanatosilanes", and "mercaptosilanes" are organosilanes whose organic radical has at least one amino group, at least one isocyanate group, and at least one mercapto group, respectively. "Primary aminosilanes" are aminosilanes which have a primary amino group, i.e., an NH₂ group which is bonded to an organic radical. "Secondary aminosilanes" are aminosilanes which have a secondary amino group, i.e., an NH group which is bonded to two organic radicals.

The term "dispersion" refers to a physical state of matter that includes at least two distinct phases, wherein a first phase is distributed in a second phase, with the second phase being a continuous medium. Preferably, the dispersion comprises a solid phase which is dispersed as solid particles in a continuous liquid phase.

The term "shelf life" designates a time period after which a dispersion composition has substantially coagulated, separated or settled such that it cannot be readily applied to a surface of a substrate as homogeneous, uniform film or bead.

The term "storage stable composition" designates a composition, which has a shelf life of greater than six months when stored at room temperature and at a relative humidity (abbreviated "r.h.") of 50% when stored in a closed container. The term "room temperature" (abbreviated "RT") designates a temperature of 23°C.

The term "liquid" means that a compound denoted as such is liquid at room temperature and standard pressure, meaning that the compound is a nearly incompressible fluid that conforms to the shape of its container but retains a (nearly) constant volume independent of pressure.

The term "standard pressure" designates an absolute pressure of 1 bar.

The present invention relates in a first aspect of the invention two-component composition comprising:
A) a first component **A,** comprising:
   - an aqueous dispersion of at least one polymer **P1**;
B) a second component **B,** comprising:
   - at least one hydraulic binder **H,**
   - at least one functional compound **P2**;
wherein both components **A** and **B** are liquid or pasty and both are prepared and stored separately and mixed directly before application; and with the proviso that the functional compound **P2** comprises functional groups that chemically react with said aqueous dispersion of said first polymer **P1** to form cross-linked and/or chain-extended polymers. wherein said polymer **P1** comprises a polymer having epoxy groups and said functional compound **P2** comprises a compound having amino groups, and wherein the amount of said functional compound **P2** having amino groups is between 5 wt.% and 20 wt.-%, based on component **B.**

### Component A

The water-based two-component composition according to the present invention comprises a first component **A,** comprising an aqueous dispersion of at least one polymer **P1** having epoxy groups.

Component **A** preferably comprises between 40 and 100 wt.-% of an aqueous dispersion of least one polymer **P1** and between 0 and 4 wt.-% of a non-ionic or ionic dispersion agent, such as a tenside, said aqueous dispersion comprising said polymer **P1** with an amount of between 20 and 80 wt.-%, based on the weight of said aqueous dispersion.

The term "aqueous dispersion of a polymer" refers to a polymer dispersed in water as the main carrier. Preferably, the "aqueous" refers to a 100% water carrier. Preferably, component **A** of the inventive composition comprises less than 5% by weight, preferably less than 1% by weight, based on the total weight of the component **A,** of volatile organic compounds having a boiling point of less than 150°C.

Measurement of the solids content of an aqueous dispersion of a polymer is typically conducted in accordance with EPA Test Method 24 (40 CFR 60, Appendix A).

A variety of polymeric materials may be included in the aqueous dispersion of at least on polymer **P1**. For example, the dispersions of polymer particles may include: (meth)acrylics; vinyls; oil-modified polymers; polyesters; polyurethanes; polyamides; chlorinated polyolefins; epoxy resins; and mixtures or copolymers thereof. Further, said polymers preferably have a glass transition temperature (T_{g}) of from -60°C to 70°C, in particular from -40°C to 50°C, preferably from -30°C to 30°C, most preferably from -15°C to 25°C. In one embodiment, soft polymers are used, such as certain acrylates and butene based polymers. In such case, the T_{g} of the polymer preferably is between -60° to 15°C. Preferably, the at least one polymer **P1** which is a soft polymer has a glass transition temperature (T_{g}), determined with DSC according to ISO 11357 standard, of -60 - +10°C, more preferably of -60 - 0°C, most preferably -50 - - 10°C.

In case harder polymers are used, such as styrene based or methacrylate based polymers the T_{g} preferably ranges from 15° to 60°C, and most preferably from 20°C to 50°C.

The term "glass transition temperature" refers to the temperature measured by differential scanning calorimetry (DSC) according to the ISO 11357 standard above which temperature a polymer component becomes soft and pliable, and below which it becomes hard and glassy. The measurements can be performed with a Mettler Toledo 822e device at a heating rate of 2°C/min. The T_{g} values can be determined from the measured DSC curve with the help of the DSC software. The T_{g} is the temperature at which there is a 'sudden' increase in the specific heat (Cp). This is manifested by a shift in the baseline of the DSC curve. The International Confederation of Thermal Analysis proposes an evaluation procedure to be used to determine the T_{g}. According to this procedure two regression lines R1 and R2 are applied to the DSC curve: the regression line before the event (R1) and the regression line at the inflection point (R2). These two lines define the glass transition temperature (T_{g}) as the intersection between R1 and R2. It should be noted that the values for the T_{g} obtained by DSC are dependent on the heating rate chosen during the experiment. Generally the heating rate used by DSC measurements is 2-5°C/min.

As preferred polymers may be mentioned: i) pure acrylate copolymers obtainable as the polymerization product of a plurality of acrylic monomers such as (meth)acrylic acid, (meth)acrylic monomers containing a hydroxyl group, (meth)acrylic acid esters and (meth)acrylonitrile; ii) styrene-acrylate copolymers obtainable as the polymerization product of a monomer mixture comprising styrene and/or substituted styrene in an amount of up to 100 wt.%, preferably of from 30 to 90 wt.% and more preferably of from 40 to 80 wt.%, based on total monomers, and one or more acrylic monomers, such as (meth)acrylic acid, (meth)acrylic monomers containing a hydroxyl group, (meth)acrylic acid esters and (meth)acrylonitrile; and, iii) ethylene vinyl acetate copolymers obtainable as the polymerization product of vinyl acetate, ethylene, and optionally other co-monomers.

A monomer is a substantially mono-disperse compound of low molecular weight - typically less than one thousand Daltons - that is capable of being polymerized.

An aqueous dispersion of polymer particles is intended to encompass the meaning of latex polymer and water-dispersed polymeric solids.

A "latex" polymer means a dispersion or emulsion of polymer particles formed in the presence of water and one or more secondary dispersing or emulsifying agents (e.g., a surfactant, alkali-soluble polymer or mixtures thereof) whose presence is required to form the dispersion or emulsion. The secondary dispersing or emulsifying agent is typically separate from the polymer after polymer formation. In some embodiments a reactive dispersing or emulsifying agent may become part of the polymer particles as they are formed.

It is preferred that the aqueous dispersion of at least one polymer **P1** is directly provided as a dispersion in the water based medium, which dispersion may then be mixed with additional water, additional dispersible polymers **P1,** and other additives, as required, to form component **A.** It is possible to prepare such a dispersion entirely from water and (re)dispersible polymers **P1,** or it is possible to add the same or different (re)dispersible polymers **P1** to an already prepared dispersion of polymers **P1,** or it is possible to dilute an already prepared dispersion of polymers **P1** with water. Such dispersions may be provided using known commercial products such as: Styropor P555 (styrene homopolymer available from BASF Aktiengesellschaft); for styrene butadiene copolymers, Lipaton SB 3040, Lipaton SB 2740 (Polymer Latex GmBH), Styrolux 684 D (BASF Aktiengesellschaft) and, Synthomer 20W20 (Synthomer Chemie); Synthomer VL 10286 and Synthomer 9024 (styrene/butadiene/acrylonitrile terpolymer, Synthomer Chemie); for styrene acrylate copolymers, Alberdingk^{®} H 595, Alberdingk^{®} AS 6002 (both Alberdingk Boley), Rhodopas DS 913 (Rhodia), Acronal^{®} 290D, Acronal^{®} S 400, Acronal^{®} DS 5011 (BASF Aktiengesellschaft), Vinnapas SAF 54 (Wacker Polymer Systems), Mowilith LDM 6159 (Celanese) and Lipaton AE 4620 (Polymer Latex GmBH); and, B60A (pure acrylate dispersion available from Rohm & Haas). Other exemplary commercially available latex polymers include: AIRFLEX^{®} EF811 (available from Air Products); EPS 2505 (available from EPS/CCA); and, NEOCAR^{®} 2300, NEOCAR^{®} 820 and NEOCAR^{®} 2535 (available from Dow Chemical Co.).

Alternatively, the aqueous dispersion of at least one polymer **P1** may be provided by polymerizing appropriate monomer mixtures. P.A. Lovell, M.S. El-Aasser (Editors), "Emulsion Polymerization and Emulsion Polymers", John Wiley and Sons, Chichester, UK, 1997 is mentioned as an appropriate reference for this. The polymerization of the monomer mixture is preferably conducted under stirring or mixing in a water based-medium. The volume of the water based medium is adjusted so that the obtained polymer emulsion offers the desired physical properties. These processes should give aqueous dispersions with a solids content of from at least 40 to 70% by weight, preferably between 20 and 90% by weight. Moreover, where the resultant emulsions should be VOC compliant, the amount of hydrophilic co-solvents, such as lower alcohols, which are present in the water-based medium should be minimized.

Usually the polymerization will be carried out in an inert gas atmosphere, or at least in the absence of oxygen, at a temperature of from 20° to 110°C. If appropriate, conventional ionic, non-ionic or amphoteric emulsifiers can be added to the polymerization batch, said emulsifiers being described in, for example, M. Ash & I. Ash, Handbook of Industrial Surfactants, 3rd Edition, Synapse Information Resources Inc.

The aqueous dispersion of at least one polymer **P1** thus preferably comprises free-radically polymerized polymer(s) obtained from ethylenically unsaturated monomers. Preferably, the such polymers contain principal monomers selected from the group consisting of C₁-C₂₀-alkyl (meth)acrylates, vinyl esters of carboxylic acids containing up to 20 carbon atoms, vinyl aromatic compounds containing up to 20 carbon atoms, ethylenically unsaturated nitriles, vinyl halides, non-aromatic hydrocarbons having at least two conjugated double bonds, or mixtures of these monomers.

Furthermore, silicon-containing monomers such as, for example, vinyl trialkoxysilanes including vinyl trimethoxysilane, allyl trialkoxysilanes including allyl trimethoxysilane, (meth)acryloxyalkyl trialkoxysilanes including methacryloxypropyl trimethoxysilane, (meth)acryloxyalkyl alkyldialkoxysilanes including methacryloxypropyl methyldiethoxysilane, (meth)acryloxyalkoxyalkyl trialkoxy silanes including methacryloxyethoxyethyl trimethoxysilane, and mercaptoalkyl trialkoxysilanes including mercaptopropyl trimethoxysilane may also be incorporated at a level of from about 0.01% to about 6%, by weight based on the weight of polymer **P1** dispersed in the dispersion. Low levels of ethylenically-unsaturated monocarboxylic acids such as, for example, from 0 to about 7%, by weight, based on the weight of polymer **P1** dispersed in the dispersion, methacrylic acid or acrylic acid may be incorporated as well.

Generally, the amount of water in component **A** is about 10 to 80 wt%, preferably about 25 to 75% by weight, based on the weight of component **A.**

According to one or more embodiments of the present invention, the aqueous dispersion of at least one polymer **P1** comprises one or more polyacrylate polymers. Suitable polyacrylate dispersions and preparation method thereof are described, for example in EP 0490191 A2, DE 19801892 A1, and in EP 0620243.

Suitable polyacrylate polymers consist for the most part of (meth)acrylates of alcohols containing from 1 to 24 carbon atoms ((meth)acrylic acid ester monomers). There are preferably more than 25% by weight of these basic monomer building blocks in the polyacrylate polymers. Further monomer building blocks include, for example, vinyl esters and allyl esters of carboxylic acids containing from 1 to 20 carbon atoms, vinyl ethers of alcohols containing from 1 to 8 carbon atoms, vinyl aromatic compounds, vinyl halides, non-aromatic hydrocarbons containing from 2 to 8 carbon atoms and at least one olefinic double bond, α and β-unsaturated mono- or di-carboxylic acids containing from 3 to 6 carbon atoms, and derivatives thereof (especially amides, esters and salts). The proportions by weight of the monomer building blocks are so selected that the polyacrylate polymer has a glass transition temperature of of -60 - +10°C, preferably of -60 - 0°C, most preferably of -50--10°C.

Preferably, such polyacrylate polymers have a number average molecular weight (Mₙ) in the range of 5,000 - 200,000 g/mol, preferably 25,000 - 200,000 g/mol, most preferably 50,000 - 200,000 g/mol and/or a weight average molecular weight (M_{w}) in the range of 50,000 - 800,000 g/mol, preferably 100,000 - 800,000 g/mol, most preferably 150,000 - 800,000 g/mol.

Suitable commercially available aqueous polyacrylate dispersions suitable as aqueous dispersion of at least one polymer **P1** include Acronal^{®} S 410, Acronal^{®} V 278, Acronal^{®} DS 5017 Acronal^{®} 290 D, Acronal^{®} A323, Acronal^{®} A378, Acronal^{®} 380, Acronal^{®} S 559, Acronal^{®} S 790, Acronal^{®} 5047 (from BASF), Mowilith^{®} DM 1340 (from Celanese), Primal^{®} CA 162, Primal^{®} E-3362, Primal^{®} 2620, Primal^{®} 928ER, Primal^{®} CA 172, Rhoplex^{®} 4400, and Rhoplex^{®} A920 (from Dow Chemical), Plextol^{®} D 301 (from Synthomer), Vinnapas^{®} EP17, Vinnapas^{®} EAF68 and Vinnapas^{®} CEF52 (from Wacker).

The aqueous dispersion of at least one polymer **P1** can comprise two or more different polymers, such as polyacrylate polymers having different glass transition temperatures and different monomer compositions. Aqueous polymer dispersions comprising two or more different polyacrylated polymers can be prepared by mixing commercially available polyacrylate dispersions, such as those described above.

Component **A** can furthermore be prepared by adding dispersible or redispersible polymers **P1** to water or an already prepared dispersion of the same or different polymer **P1**. Dispersible polymers **P1** may thus be added, together with water and/or other additives, to the aqueous dispersion of at least one polymer **P1** to form component **A.** In particular, the dispersible polymer **P1** is a water-dispersible solid resin. The term "resin" describes a polymeric material that may exhibit cross-linked polymeric structures.

A "water-dispersible" resin means a resin which is capable of being combined by itself with water, with or without requiring the use of a secondary dispersing or emulsifying agent, to obtain an aqueous dispersion or emulsion of polymer or resin particles having at least a one month shelf stability at normal storage temperatures.

The dispersible solid resin used as polymer **P1** can be prepared and used in bulk, powdered form that would be re-dispersed in the water during the formulation of component **A.** Acronal^{®} S 430 P (BASF SE) is an example of a suitable commercial, re-dispersible styrene-acrylate copolymer powder.

Suitable dispersible solid resins useable as polymer **P1** include, for example, polyvinyl acetate, polyvinyl alcohol, polyacrylates, epoxy resins, polyurethanes, polyurethane-acrylates, natural based polymers, carboxylated polystyrene-compolymers, carboxylated butadiene styrene copolymers, carboxylated butadiene rubbers styrene-butadiene copolymers, styrene-isoprene copolymers, ethylene-vinyl acetate copolymers (EVA), ethylene-methacrylate copolymers, ethylene-ethyl acrylate copolymers, ethylene-butyl acrylate copolymers (EBA), ethylene-(meth)acrylic acid copolymers, ethylene-2-ethylhexyl acrylate copolymers, ethylene-acrylic ester copolymers, and polyolefinc block copolymers and all polymers mentioned above comprised in the aqueous dispersion of at least one polymer **P1**.

The above-mentioned copolymers, meaning polymers made from more than one type of monomer, can be block type copolymers or random copolymers. Dispersible solid resins useable as polymer **P1** can also be further functionalized, meaning they can contain further functional groups such as hydroxyl, carboxy, anhydride, acrylate, and/or glycidylmethacrylate groups.

Suitable dispersible solid resins useable as polymer **P1** preferably have a number average molecular weight (Mₙ) in the range of 5,000 - 200,000 g/mol, preferably 25,000 - 200,000 g/mol, most preferably 50,000 - 200,000 g/mol. The number average and molecular weight can be determined by gel permeation chromatography using polystyrene as standard in a polymer solution in tetrahydrofuran.

In preferred embodiments, said polymer **P1** comprises a water-dispersed (meth)acrylate homo- or copolymer and/or an ethylene-vinyl acetate copolymer.

At least one polymer **P1** in component **A** comprises epoxy groups, in particular glycidyl (ether or ester) groups. Such polymers are used in combination with amino-functional compounds **P2** in component **B.** During and after mixing of the two components **A** and **B,** the epoxy groups of the polymers **P1** react with the amino groups of the compounds **P2** to form cross-linked and/or chain-extended polymers and, ultimately, contribute to the curing mechanism of the polymer network when the composition is hardening. Suitable amino-functional compounds **P2** are described further below.

The epoxy-functional polymer **P1** should comprise enough epoxy groups that a sufficient crosslinking can take place when reacting with the amino-functional compounds **P2**. Preferably, epoxy-functional polymers **P1** of this embodiment have an Epoxy-Equivalent Weight (EEW) of between 100 and 500 g/equivalent, in particular between 200 and 400 g/equivalent. Correspondingly, aqueous dispersions of such polymers **P1** preferably have an EEW of between 250 and 750 g/equivalent, in particular between 400 and 600 g/equivalent, based on the weight of the dispersion of polymer **P1**.

Examples of such preferred aqueous dispersions of epoxy-functional polymers **P1** include, for example, the Ancarez^{®} products from Evonik.

Component **A** furthermore optionally comprises up to 4 wt.-% of a nonionic or ionic dispersing agent **D.** This additive is especially useful in embodiments where dispersible solid resins or polymers **P1** are added to component **A,** since nonionic or ionic dispersing agent **D** helps forming a stable and homogeneous dispersion of polymers and resins.

Suitable nonionic or ionic dispersing agent D include surfactants, tensides, emulgators, polymeric materials capable to stabilize dispersions and the like, as known to the skilled person in the art of polymer dispersion formulation.

Surfactants or tensides are preferred for use as nonionic or ionic dispersing agent **D** in component **A** according to the present invention. Suitable surfactants or tensides include anionic, non-ionic, cationic or amphoteric surfactants, but preferably a non-ionic or anionic surfactant is employed.

Suitable non-ionic surfactants or tensides include polyethylene oxide condensates of alkylphenols, polyoxyalkylene derivatives of propylene glycol, condensates of ethylene oxide and the reaction product of propylene oxide and ethylene diamine, ethylene oxide condensates of aliphatic alcohols, long chain tertiary amine oxides, long chain tertiary phosphine oxides, long chain dialkyl sulfoxides and the like. Useful anionic surfactants include those obtained by alkylating aromatic nuclei, sulfonating the resulting alkylated aromatic hydrocarbons and neutralizing the sulfonation products. Alkyl benzene sulfonates, such as dodecylbenzenesulfonate are typical of this class. Fatty alcohol sulfates are also useful as surface active agents.

Furthermore suitable and recommended as nonionic or ionic dispersing agent **D** are polycarboxylate salts, such as polycarboxylate ammonium salts, for example commercially available under the trade name Dispex^{®} dispersing agent by BASF. Another suitable dispersing agent is available under the trade name Lucramul^{®} by Levaco Chemicals.

The amount of nonionic or ionic dispersing agent **D** used in component **A** depends on the type and amount of dispersible polymer **P1** and other constituents included in component **A.** The skilled artisan in the field of resin and polymer dispersions is able to adjust the amount accordingly in order to obtain a stable, homogeneous component **A.** Some dispersible polymers **P1** do not require nonionic or ionic dispersing agent **D** at all due to their molecular structure and particle size.

In some embodiments, component **A** of the inventive two-component composition comprises between 0.1 and 15 wt.-%, based on the total weight of component **A,** of a monovalent metal salt **M.**

The addition of a monovalent metal salt **M** has the advantage, that a component **A** exhibits a lower viscosity compared to an otherwise identical component **A** that does not include the monovalent metal salt **M.**

The term "monovalent metal salt" describes a salt that comprises a monovalent metal cation and any anion. Monovalent metals are metal atoms which are present in the stable oxidation state +1, so for example Na⁺, K⁺, Ag⁺, etc.

Component **A** of the inventive composition may contain other optional additives, such as fillers and plasticizers, among others commonly known to one of average skill in the field of aqueous polymer dispersions.

A filler influences the rheological properties of the uncured composition and also the mechanical properties and the surface nature of the fully cured composition. Suitable fillers are inorganic and organic fillers, as for example natural, ground or precipitated chalks (which consist entirely or primarily of calcium carbonate), and which are optionally coated with fatty acids, more particularly stearic acid; barium sulfate (BaSO₄, also called barite or heavy spar), calcined kaolins, aluminum oxides, aluminum hydroxides, silicas, especially finely divided silicas from pyrolysis processes, carbon blacks, especially industrially manufactured carbon black, titanium dioxide, PVC powders, or hollow beads. Preferred fillers are calcium carbonates, calcined kaolins, carbon black, finely divided silicas, and flame-retardant fillers, such as hydroxides or hydrates, especially hydroxides or hydrates of aluminum, preferably aluminum hydroxide.

It is entirely possible and may even be an advantage to use a mixture of different fillers.

According to one or more embodiments, component **A** of the inventive composition has a solids content of 20 - 90% by weight, preferably 40 - 80% preferably 50 - 75% by weight, most preferably 55 - 70% by weight.

The solids content as used herein refers to the portion of the aqueous dispersion adhesive composition, which when heated to a temperature of 105°C for at least one hour at one atmosphere pressure does not volatilize. Accordingly, the solids content refers to polymeric materials, non-volatile plasticizers, inorganic solids and non-volatile organic materials, whereas the non-solid portion is generally comprised of water and any organic materials readily volatilized at 105°C.

Component **A** may further optionally contain one or more plasticizers. It is however preferred that no or only small amounts of plasticizers are used. The use of a plasticizer depends on the intended application and the dispersed polymers and resins used. Very soft polymers with a very low T_{g}, such as for example -60°C, do not necessarily require the addition of a plasticizer. Furthermore, if the inventive composition is intended to be used as an adhesive, plasticizers may also be minimized or omitted in the composition. For uses where a soft joint sealant (with low Shore A hardness) or a coating is required, and/or when using a polymer or resin with a higher T_{g}, such as for example -10°C, the use of a plasticizer may be advantageous.

Suitable plasticizers are liquid or solid inert organic substances having a low vapor pressure, preferably having a boiling point of above 200°C measured at standard pressure. Plasticizers can be selected from the group consisting of adipic and sebacic acid plasticizers, phosphoric acid plasticizers, citric acid plasticizers, fatty acid esters and epoxidised fatty acid esters, polypropylene glycol, polyethylene glycol, benzoates, and phthalates or esters of 1,2-dicarboxy cyclohexane.#

Suitable fatty acid esters include alkyl esters of fatty acids containing more than about 14 or more than about 16 carbon atoms, for example the alkyl esters of lauric, myristic, stearic, arachidic and behenic acid and mixtures thereof. Suitable as fatty alcohols are the alcohols of the above-mentioned fatty acids, such as are obtainable from the fatty acids or esters thereof by use of processes known to the person skilled in the art.

Component **A** of the inventive composition can further comprise one or more tackifiers. Examples of suitable tackifiers may include hydrocarbon resins or hydrogenated products thereof, rosins or hydrogenated products thereof, rosin esters or hydrogenated products thereof, terpene resins or hydrogenated products thereof, terpene phenolic resins or hydrogenated products thereof, and polymerized rosins or polymerized rosin esters or acrylic liquid resins.

In preferred embodiments, component **A** comprises either a filler, a defoamer, a thickener, a tenside, and/or a dispersing agent, or several or all of these additives.

Component **A** of the inventive composition can also contain one or more further additives such as wetting agents, thickeners, anti-foams, flame retardants, stabilizers, colorants, antioxidants, UV-absorbers and/or biocides. Such further additives commonly used in water-based dispersions as additives are known to a person skilled in the art.

Suitable anti-foams or defoamers are preferably compounds based on mineral oils or silicones. Suitable thickeners include compounds that are based on (meth)acrylic acid copolymers, cellulose derivatives, mineral thickeners such as clays, silica, or mixtures thereof.

Biocides (preservatives) may be added to the compositions according to the present invention in an amount of between 0 wt.-% and 2 wt.-%, preferably between 0.2 wt.-% and 1.8 wt.-%, more preferably between 0.4 wt.-% and 1.5 wt.-%, with respect to the total composition, of a biocide.

In general any known type of biocides, also denoted as preservatives, can be used in the composition of the present invention.

Suitable as preservatives are customary preservatives, for example benzisothiazolinone (BIT), methylisothiazolinone (MIT), octylisothiazolinone (OIT), chloromethyl isothiazolinone (CMIT), and the like.

According to one or more embodiments, the total amount of the further additives is preferably 0 - 15.0.-%, more preferably 0 - 10.0.-%, based on the total weight of component **A.**

Component **A** can be prepared by mixing the ingredients together at room temperature. Any suitable mixing apparatus can be used for the preparation of component **A.**

### Component B

The water-based two-component composition according to the present invention comprises a second component **B** that comprises at least one hydraulic binder **H** and at least one functional compound **P2** having amino groups.

Preferably, component **B** of the inventive composition is a stable liquid or paste-like composition which is formed by mixing the hydraulic binder **H** with a liquid functional compound **P2** and/or a liquid carrier such as a plasticizer. In its broadest definition, a liquid carrier here is a material that when added to another yields a mixture which is easier to handle or has greater utility. In a refinement of that definition, a liquid carrier as used herein means an organic or semi-organic liquid which is usually non-volatile at room temperature and standard pressure and which has no specific chemical reactivity with the other constituents contained in the composition. As such, this liquid is inert towards the hydraulic binder and merely serves as a medium in which that binder may be suspended or otherwise dispersed. In some embodiments, the functional compound **P2** itself is a liquid that serves as liquid carrier, but in this cases, it is only chemically inert with the hydraulic binder, but will react with the aqueous dispersion of polymer **P1** during and after mixing of the two components **A** and **B.**

Suitable and preferred non-aqueous liquid carriers include liquid plasticizers known to the person of average skill in the field of hydraulic binder and elastic sealant or adhesive compositions, such as the ones mentioned further above for component **A.** Suitable plasticizers may be selected from a broad group of compounds as any water free organic liquid with low volatility will be effective. Suitable classes of compounds include polyalkyleneglycols and other polyethers, sulphonated or phosphorylated organic compounds, alkyl or aryl esters of aromatic or aliphatic organic acids, oils from natural or synthetic nature, a variety of vinyl polymers, and polyesters or silicones.

Suitable polyalkyleneglycols include polyethylene glycol, blends with polypropylene glycol or other co-plasticisers to make it liquid, polypropylene glycol and other liquid polyethers in general, e.g. copolymers of ethylene oxide, propylene oxide and/or butylene oxide. Suitable sulphonated or phosphorylated organic compounds include alkyl sulfonic acid ester of phenol and cresol (for example available as Mesamoll) and aromatic sulfonamides. Suitable alkyl or aryl esters of organic acids include benzoic acid esters of glycols and their oligomers (for example available as Benzoflex), esters of 1,2 dicarboxy cyclohexane (Hydrogenated phthalates such as commercially available under the trade name Hexamoll DINCH), phthalic acid esters, terephthalic acid esters, trimellitates, adipic acid esters, sebasic acid esters, tartrate esters, citric acid esters and sucrose esters. Suitable oils from natural or synthetic nature include vegetable oils and their derivatives including fatty acid esters and epoxidised vegetable oils, organic liquids derived from wood and other forest products like liquid rosin esters and hydrocarbon fluids such as mineral oil or paraffinic liquids. Suitable vinyl polymers include polyisobutene, liquid polybutadiene and liquid polyacrylates. Liquid polyesters and silicone fluids are also suitable and available to the skilled person. The above mentioned plasticizers can be used in combination as non-aqueous liquid carrier.

Preferably, materials which may be degraded by alkaline hydraulic binders should not be selected from the above mentioned list for use as non-aqueous liquid carrier in the present invention. Any such degradation may be detected by the emission of an odor from the binder. Ester based compounds may be susceptible to alkaline environment.

The non-aqueous liquid carrier and / or the second component **B** as a whole must be essentially water free. By this is meant that the non-aqueous liquid carrier and / or the second component **B** as a whole contain less than 10 wt.-% water, by weight of the composition, preferably less than 1.0 wt.-%, 0.5 wt.-%, 0.2 wt.-% or 0.1 wt.-% and most preferably 0 wt.-% of water, based on the total weight of component **B.**

A sufficient amount of non-aqueous liquid carrier must be employed to act as a carrier material for the hydraulic binder and to ensure the component **B** is liquid or at least homogeneously paste-like. The exact amount of non-aqueous liquid carrier needed will depend upon the type and amount of hydraulic binder **H** as well as the types and amounts of other additives which may be present in the concentrate.

The resulting mixture is subjected to sufficiently high shear forces to thoroughly disperse the dry component. A broad range of mixers can be used, which are suitable for liquid/powder blends normally used in the paint and adhesives industries. Suitable mixers include a conventional blending mill, like a ball mill or similar, dissolvers, planetary mixers, speedmixers, monomixers and extruder mixers such as the Buss co-kneader and twin screw extruders. The end product may be liquid, viscous, or paste-like (pasteous), with a viscosity up to 100 Pa.s, or higher. The viscosity, time, temperature, total energy input or homogeneity can be used as criterium to end the milling process. The viscosity of the mixture in a preferred embodiment has a value from about 500 to 5,000 mPa.s as measured at 25°C. For viscosities up to 100 000 mPa.s a Brookfield viscosimeter may be used with a choice of spindle and rotational speed suitable for the actual viscosity range. For viscosities above 100 000 mPa.s a plate/plate oscilating rheometer may be used. The mentioned viscosity range is valid for the approximate shear rate of 100 s⁻¹.

Component **B** preferably comprises, based on the total weight of component **B,** between 10 and 90 wt.-% of at least one hydraulic binder **H.**

Herein the expression "hydraulic binder" is understood to mean a, in most cases pulverulent, material which, mixed with water, forms a paste which sets and hardens by a series of hydration reactions and processes and which, after hardening, retains its strength and its stability even under water.

A hydraulic binder or hydraulic binding agent is thus a substantially inorganic or mineral material or blend, which hardens when mixed with water. Hydraulic binders also encompass latent hydraulic binders or pozzolanic binders which usually require activation, e.g. by the presence of lime, in order to show hydraulic properties. All hydraulic binders known to those skilled in the art are suitable.

Typical examples of hydraulic binders are at least one of cement, e.g. Portland cement, fly ash, granulated blast furnace slag, lime, such as limestone and quicklime, rice husk, calcined paper sludge, fumed silica and pozzolana or a mixture thereof.

A preferred hydraulic binder **H** is Portland cement.

The term "Portland cement" as used herein is intended to include those cements normally understood in the art to be "Portland cement" such as those described in British Standards Institution (BSI) EN-197 and American ASTM Standard C-150 and European Standard EN-197. The types CEM I and CEM II compositions of the latter standard are preferred for use in the present invention, although other forms of Portland cement are also suitable. Portland cement consists mainly of tri-calcium silicate and dicalcium silicate.

The Portland cement - for subsequent inclusion in the liquid first component of the present invention - preferably has an air permeability specific surface area (Blaine value) of from 3000 to 9000 cm²/g, preferably from 4000 to 6000 cm²/g.

The term "storage stable" as it applies to the component **B** of the formulation which contains the hydraulic binder **H,** is intended to mean that the hydraulic binder therein remains reactive towards water when mixed therewith after a period of storage, typically up to 1 year or greater.

In preferred embodiments, the hydraulic binder **H** comprises calcium aluminate, also known as aluminate cement and/or calcium sulfoaluminate. The term "aluminate cement" as used herein is intended to include those cementitious materials normally understood in the art to contain as the main cementitious constituent, mono calcium aluminate (CaO x Al₂O₃). This would include high alumina cement (HAC), calcium aluminate cement, and many other commercially available alumina cements. High alumina cement is normally understood in the art to contain greater than 15% of mono calcium aluminate.

The air permeability specific surface area (Blaine value) of the high alumina cement is preferably more than 2000, more preferably from 3000 to 9000 cm²/g. This fineness of the raw material facilitates its wetting and / or dispersion in the anhydrous, inert liquid of the first component.

The hydraulic binder **H** may be included in form of powder, or partially, in form of clinker. For example, in preferred embodiments, calcium aluminate and/or calcium sulfoaluminate clinkers are included in the hydraulic binder **H.**

The hydraulic binder **H** in component **B** furthermore preferably comprises, based on the total weight of component **B,** between 0 and 20 wt.-% of calcium sulfate, preferably between 2 and 18 wt.-%, more preferably between 5 and 15 wt.-%, based on the total weight of component **B.** Herein, "calcium sulfate" means not only CaSO₄ as a pure chemical compound, but also natural or synthetic gypsum which may contain traces of impurities. This would include calcium sulfate (CaSO₄) and its various forms such as calcium sulfate anhydrate, calcium sulfate hemihydrate and calcium sulfate dihydrate, as well as calcined gypsum, pressure calcined gypsum and plaster of Paris.

Including calcium sulfate in the hydraulic binder **H** has the advantage that the resulting composition cures faster via the reaction of hydraulic binder **H and** water.

Using gypsum as a raw material - for subsequent inclusion in component **B** of the present invention - the gypsum should have a minimum purity of 90% and be preferably finely ground to a particle size such that at least 90 wt.%, and preferably at least 99 wt.% of the gypsum particles, based on the total weight of the gypsum particles will pass through a No. 100 U.S. Standard sieve (150 microns). Such a gypsum plaster is available from a number of commercial sources. For instance, a preferred α-calcium sulfate hemihydrate (alpha gypsum) is DynaPlast^{™} Base Alpha available from Allied Custom Gypsum Plasterworks, L.L.C.

Especially preferred embodiments contain as hydraulic binder **H** Portland cement and calcium aluminate and/or calcium sulfoaluminate and, optionally, calcium sulfate.

For these embodiments, components **B** preferably comprise between 5 and 50 wt.-%, preferably between 10 and 40 wt.-%, more preferably between 15 und 30 wt.-%, based on the total weight of component **B,** Portland cement and between 10 and 70 wt.-%, preferably between 15 and 60 wt.-%, more preferably between 20 und 50 wt.-%, based on the total weight of component **B,** calcium aluminate and/or calcium sulfoaluminate.

In addition, component **B** optionally comprises rheology modifiers, thickeners, or thixotropic additives, herein called thixotropy agents **T,** with an amount of between 0 and 10 wt.-%, preferably between 1 and 5 wt.-%, based on the total weight of component **B.** Suitable as thixotropy agents **T** are for example urea compounds of the type described as thixotropy agents ("Thixotropy endowing agent") in WO 02/48228 A2 on pages 9 to 11, polyamide waxes, bentonites or pyrogenic silicas. These additives are especially suitable for compositions with lower viscosities, for example < 15 Pa.s, since they allow formulating a smoother, more homogeneous composition that does not easily run off when applied to a surface with a slope.

According to the invention, component **B** comprises at least one functional compound **P2** having amino groups. The term "functional" here means that compound **P2** contains functional groups in the chemical sense that are able to react with the aqueous dispersion of polymer **P1** of component **A** during or after mixing of the two components **A** and **B.** The mentioned functional groups may react with functional groups on the polymer **P1** itself, or they may react with the water contained in the aqueous dispersion of polymer **P1,** as long as the reaction of the functional groups of compound **P2** with any species of the aqueous dispersion of polymer **P1** leads to the formation of chain-extended and/or cross-linked polymers, and thus, eventually, a cross-linked polymeric structure within the cured two-component composition.

The functional compound **P2** is a polyamine. Such an amino-functional compound **P2** is used in combination with an epoxy-functional polymer **P1** in component **A.**

By "poly" in "polyamine" is meant molecules which formally contain two or more amino groups. Preferably, these amino groups are primary or secondary amino groups, more preferably primary amino groups. Preferably, the polyamine has aliphatic amino groups that may be attached to an aliphatic, cycloaliphatic or arylaliphatic radical. They consequently differ from the aromatic amines, in which the amino groups are attached directly to an aromatic radical, such as in aniline or 2-aminopyridine, for example.

Suitable polyamines having aliphatic primary amino groups are customary polyamines such as are used, for example, in polyurethane or epoxy chemistry. Examples that may be mentioned include the following: aliphatic polyamines such as ethylenediamine, 1,2- and 1,3-propanediamine, 2-methyl-1,2-propanediamine, 2,2-dimethyl-1,3 propanediamine, 1,3- and 1,4-butanediamine, 1,3- and 1,5-pentanediamine, 1,6-hexanediamine, 2,2,4- and 2,4,4-trimethylhexamethylenediamine and mixtures thereof, 1,7-heptanediamine, 1,8-octanediamine, 4-aminomethyl-1,8-octanediamine, 1,9-nonanediamine, 1,10-decanediamine, 1,11-undecane-diamine, 1,12-dodecanediamine, methylbis(3-aminopropyl)amine, 1,5-diamino-2-methylpentane (MPMD), 1,3-diaminopentane (DAMP), 2,5-dimethyl-1,6 hexamethylenediamine, cycloaliphatic polyamines such as 1,2-, 1,3- and 1,4-diaminocyclohexane, bis(4-aminocyclohexyl)methane, bis(4-amino-3 methylcyclohexyl)methane, bis(4-amino-3-ethylcyclohexyl)methane, bis(4 amino-3,5-dimethylcyclohexyl)methane, 1-amino-3-aminomethyl-3,5,5-trimethylcyclohexane (= isophoronediamine or IPDA), 2- and 4-methyl-1,3 diaminocyclohexane and mixtures thereof, 1,3- and 1,4-bis(aminomethyl)-cyclohexane, 1-cyclohexylamino-3-aminopropane, 2,5(2,6)-bis(aminomethyl)-bicyclo[2.2.1]heptane (NBDA, manufactured by Mitsui Chemicals), 3(4),8(9)-bis-(aminomethyl)tricyclo[5.2.1.02,6]decane, 1,4-diamino-2,2,6-trimethylcyclohexane (TMCDA), 3,9-bis(3-aminopropyl)-2,4,8,10-tetraoxaspiro[5.5]undecane, 1,3- and 1,4-xylylenediamine, aliphatic polyamines containing ether groups, such as bis(2-aminoethyl)ether, 4,7-dioxadecane-1,10-diamine, 4,9-dioxadodecane-1,12-diamine and higher oligomers thereof, polyoxyalkylene-polyamines having in theory two or three amino groups, obtainable for example under the name Jeffamine^{®} (manufactured by Huntsman Chemicals), and also mixtures of the aforementioned polyamines. Preferred polyamines are 1,6-hexamethylenediamine, MPMD, DAMP, 2,2,4- and 2,4,4-trimethylhexamethylenediamine, 4-aminomethyl-1,8-octane-diamine, IPDA, 1,3- and 1,4-xylylenediamine, 1,3- and 1,4-bis(aminomethyl)-cyclohexane, bis(4-aminocyclohexyl)methane, bis(4-amino-3-methylcyclohexyl)methane, 3(4),8(9)-bis(aminomethyl)tricyclo[5.2.1.02,6]decane, 1,2-, 1,3- and 1,4-diaminocyclohexane, polyoxyalkylene polyamines, in particular polyoxypropylene amines, having in theory two or three amino groups, especially Jeffamine^{®} EDR-148, Jeffamine^{®} D-230, Jeffamine^{®} D-400 and Jeffamine^{®} T-403, and, in particular, mixtures of two or more of the aforementioned polyamines.

Particularly preferred are liquid polyamines. Those have the advantage that less or no liquid carrier can be used when formulating component **B** and thus plasticizer migration effects can be minimized. Most preferred polyamines are polymeric polyamines, in particular liquid polymeric polyamines. Those have the advantage that especially good mechanical properties and resistance in the cured product can be obtained. Apart from that, they can be employed in relatively high amounts due to their low amine content compared to small molecule polyamines, and they can substitute partially or completely the liquid carrier, provided they are liquid as well. Among those polymeric polyamines, particularly preferred are polyoxyalkylene polyamines, in particular polyoxypropylene amines, having in theory two or three amino groups, especially Jeffamine^{®} EDR-148, Jeffamine^{®} D-230, Jeffamine^{®} D-400 and Jeffamine^{®} T-403.

Use of a polyamine in component **B** has the additional advantage that a component **B** exhibits a lower viscosity compared to an otherwise identical component **B** that does not include a polyamine.

A suitable amount of polyamine in component **B** depends of course on the type of polyamine used, especially concerning molecular weight and on the amount and EEW of epoxy compounds used in component **A.** Therefore, polyamines with higher molecular weight generally have to be added in larger amounts to yield the same effect, compared to polyamines with the same amount of amino groups but lower molecular weight. This is however advantageous in case of liquid (especially polymeric) polyamines, since they can thus partially or completely substitute any liquid carrier otherwise necessary.

In general, an equimolar amount of amino groups in component **B** to amount of epoxy groups in component **A** is preferred, but even a large deviation from this ratio still leads to useful products, as long as a sufficient cross-linking can be achieved for curing of the polymeric network.

The amount of polyamine in compound **P2** is in the range of 5 to 20 wt.-%, preferably of 10 to 15 wt.-%, based on the total weight of component **B.** Component **B** furthermore preferably comprises an organosilane, in particular a silane having a primary amino group. Such an additive improves the adhesion of the composition on many substrates. Examples of preferred silanes having primary amino groups include 3-Aminopropyl trimethoxysilane and 3-Aminopropyl triethoxysilane.. A suitable amount of organosilanes, in particular silanes having a primary amino group, in component **B** is between 0 and 3 wt.-%, preferably between 1 and 2.5 wt.-%, based on the total weight of component **B.**

Both components **A** and **B** of the present invention are liquid or pasty. The term "pasty" describes an essentially liquid composition that however exhibits such a high viscosity that it is not readily self-levelling and it may show thixotropic (shear-thinning) behavior. A pasty consistency may be the result of a high solids content or the use of a thickener or thixotropy additive, while liquid consistency is usually observed in compositions with lower solids content and/or use of significant amounts of liquid carriers such as plasticizers.

A preferred embodiment of the two-component composition comprises a component **A** that comprises, based on the total weight of component **A:**
- between 10 and 50 wt.-%, preferably between 15 and 25 wt.-%, of a water-dispersed polymer **P1** not having epoxy groups,
- between 15 and 50 wt.-%, preferably between 20 and 35 wt.-%, of a water-dispersed polymer **P1** having epoxy groups,
- between 15 and 75 wt.-% of water,
- between 0 and 50 wt.-%, preferably between 5 and 25 wt.-%, of a filler,
- between 0 and 10 wt.-%, preferably between 0.5 and 5 wt.-%, of additives selected from defoamers, thickeners, tensides, and dispersed pigments; and
a component **B** that comprises, based on the total weight of component **B:**
- between 5 and 20 wt.-%, of a compound, in particular a polymer, **P2** having amino groups,
- between 50 and 80 wt.-%, of a hydraulic binder **H,**
- between 0 and 30 wt.-%, preferably between 5 and 25 wt.-%, of a plasticizer,
- between 0 and 3 wt.-%, preferably between 1 and 2.5 wt.-%, of a silane having a primary amino group.

A water-based cementitious cast, coating, sealant, or adhesive according to the present invention, comprising a component **A** and a component **B** as described above, is mixed before application by mixing the two components **A** and **B** into a homogeneous mixture. Any static or dynamic mixing device or method can be used, as long as a macroscopically homogeneous mixture can be obtained.

Preferably, taking into account the individual amounts preferred for the constituents of components **A** and **B,** the mixing weight ratio of component **A** : component **B** is between 4 : 1 and 1 : 4, preferably between 1.5 : 1 and 1 : 1.5.

It is possible to use additional components to be mixed into the mixture of component **A** and **B,** such as pigment paste component, or the like.

After mixing, the mixed two-component composition according to the present invention has a pot-life at room temperature of between 10 min and 180 min, during which application has to be performed. Preferred embodiments have a pot-life of between 15 and 120 min, preferably between 20 and 110 min. The individual pot-life depends mainly on the amount and type of hydraulic binder and influencing additives, such as accelerators. After this time, the curing progress of the hydraulic binder makes a subsequent application difficult or impossible.

The inventive two-component composition is especially suitable for adhesively sealing joints in or coating substrates of wood, plastic, such as PVC, or metal, mineral substrates such as plaster flooring, natural stone, concrete, cementitious levelling compounds or gypsum-based levelling compounds.

According to another aspect of the present invention, a method for adhesively joining two substrates is provided, the method comprising steps of:
i) Mixing the two components of a two-component composition according to the present invention in a weight ratio of component **A** : component **B** of between 4 : 1 and 1 : 4,
ii) Applying the thus-obtained water-based cementitious adhesive to a first substrate to form a wet film or bead of adhesive on the first substrate, or applying the thus-obtained water-based cementitious adhesive to a first substrate and to a second substrate to form a wet film or bead of adhesive on both substrates, or applying the thus-obtained water-based cementitious adhesive into a gap between a first substrate and a second substrate to bridge the gap between the two substrates,
iii) Optionally exposing the wet film to air,
iv) Joining a second substrate to the first substrate, if necessary, such that the wet film or bead on the first substrate is in contact with the second substrate, or such that both wet films or beads on both substrates are in contact with each other, to effect bonding there between.

The dispersion adhesive, sealant, cast, or coating composition can be applied on the surface of the substrate using for example, a toothed trowel or a roller.

According to another aspect of the present invention, use of the a two-component composition of the present invention after mixing for adhesively bonding two substrates and/or for sealing a joint between one or two substrates and/or for coating a surface on a substrate and/or for casting an object is provided.

Yet another aspect of the present invention is a dried water-based cementitious sealant, coating, cast, or adhesive according to the present invention.

### Examples

The invention is further explained in the following experimental part which, however, shall not be construed as limiting to the scope of the invention. The proportions and percentages indicated are by weight, unless otherwise stated. Accordingly, "wt.-%" means percentage by weight, based on the weight of the total composition given in the respective case. "RT" means room temperature or ambient temperature and describes a temperature of 23°C. The abbreviation "r.h." or "% r.h." means relative humidity (in %) of the ambient air in a given example or test method.

### Test methods

**Tensile strength** and the **elongation at break** were determined according to DIN 53504 (tensile speed: 200 mm/min) on films with a layer thickness of 2 mm, cured for 14 days at 23°C and 50% relative humidity.

**Tear propagation resistance** was determined according to DIN 53515, on films with a layer thickness of 2 mm, cured for 7 days at 23°C and 50% relative humidity.

**Shore A** hardness was determined according to DIN 53505 on samples with a layer thickness of 6 mm, cured for 7 days at 23°C (RT) and 50% relative humidity.

**Adhesion** was tested on selected substrates using a bead adhesion test. For this, a cut is made between the cured adhesive and the substrate just above the adhesion interface. The incised end of the bead is held by hand and pulled away from the substrate. This is done by carefully rolling up the bead away from the adhesion interface, and by placing a cut vertical down to the bare substrate to the bead pulling direction. The bead removal rate should be selected so that about every 3 seconds a fresh cut is made. The test track must be at least 5 cm. An assessment is made by peeling off the bead on the surface residual adhesive (cohesive failure assessment). The adhesion properties are evaluated by estimating the cohesive component of the adhesion interface:
1 = more than 95% cohesive failure (less than 5% adhesive failure)
2 = 76 - 95% cohesive failure
3 = 25 - 75% cohesive failure
4 = less than 25% cohesive failure
5 = 0% cohesive failure (purely adhesive failure).

An adhesion with more than 75% cohesive failure is considered sufficient.

Adhesion substrates were purchased from Rocholl GmbH, Germany. "AIMg1": Aluminum EN-AW5005; "AlMg3": Aluminum EN-AW5754; "Al elox.": anodized aluminum; "steel": hot-rolled steel; "concrete": concrete slab according to ISO 13640; "wood": beechwood.

### Raw materials

The raw materials and their description regarding important properties which were used for the example sealant compositions are shown in Table 1.

**Table 1: Raw materials used for the example compositions.**

| **Raw material** | **Description** |
|---|---|
| Dispersion of polymer **P1a** (50% solids) | Aqueous anionic dispersion of a styrene acrylate copolymer (ca. 50% solids, mean particle size ca. 0.15 µm) |
| Dispersion of Polymer **P1b** having epoxy groups (55% solids) | Aqueous dispersion of solid epoxy resin (ca. 55% solids, EEW ca. 550 g/equivalent) |
| Dispersible polymer **P1c** | Flexible dispersible polymer powder based on vinyl acetate, ethylene and vinyl ester (mean particle size < 0.4 µm; Vinnapas^{®} 7034 E, Wacker Chemie) |
| Tenside | Nonyl phenol ethoxylate (Berol^{®} EP 25, AkzoNobel) |
| Defoamer | Mixture of foam-destroying polysiloxanes and hydrophobic solids in polyglycol (Byk-022, BYK Additives) |
| Dispersing agent | Polyacrylic acid sodium salt in water (ca. 35% solids; Dispex^{®} AA 4135, BASF) |
| Hydraulic binder **H** | Ternary rapid cement mixture containing Portland cement, calcium aluminate cement and calcium sulfate (Schönox^{®} SEZ, Schönox, Germany) |
| Functional compound **P2a1** having hydrolysable silane groups | Silane-functional polymer with polyether-based backbone (Geniosil^{®} XB 502, Wacker Chemie) |
| Functional compound **P2a2** having hydrolysable silane groups | Methoxy silane-terminated polydimethylsiloxane polymer (Polymer AL 100, Wacker Chemie) |
| Functional compound **P2b1** having amino groups | Trifunctional polyetheramine based on oxypropylene repeating units. Mₙ = 440 g/mol. (Jeffamine^{®} T403, Huntsman) |
| Functional compound **P2b2** having amino groups | Amine-functional polyethylene imine. Mₙ = 800 g/mol. (Lupasol^{®} FG, BASF) |
| Plasticizer | Diisononylphthalate (DINP) |

### Example compositions

Several component **A** and component **B** compositions were prepared from the raw materials in Table 1 using the following procedure.

### Mixing procedure

All example compositions **A** were prepared in a lab mixer using the following procedure:
a) Addition of the dispersible polymer **P1c** to the aqueous dispersion of polymer **P1a** or the mixed aqueous dispersion of polymers **P1a** and **P1b** (where applicable);
b) Addition of tenside, dispersion agent, and defoamer and mixing;
c) Mixing under vacuum until homogeneous and filling of the preparations into cartridges.
d) Storing the cartridges for at least 24 h at 23°C and 50% r.h. prior to mixing with component **B** and initiating the testing procedure.

The example components **A** thus prepared are shown in Tables 2 to 4. The numbers refer to parts per weight of the individual ingredients in the respective component **A.**

All example compositions **B** were prepared in a lab mixer using the following procedure:
a) Mixing of plasticizer and polymer **P2**;
b) Addition of Aminosilane, where applicable, and mixing;
c) Addition of the hydraulic binder **H** to the liquid mixture;
d) Mixing under vacuum until a homogeneous paste or liquid is obtained and filling of the preparations into cartridges.
e) Storing the cartridges for at least 24 h at 23°C and 50% r.h. prior to mixing with component **A** and initiating the testing procedure.

The example components **B** thus prepared are shown in Tables 2 to 4. The numbers refer to parts per weight of the individual ingredients in the respective component **B.**

For use and application, the two components **A** and **B** were mixed with a dynamic mixing system into a homogeneous mixture and immediately applied to the respective testing procedure. For examples C1 to C2 (Table 2), the weight mixing ratio was **A : B =** 0.6 : 1 and for examples C3 to C8, the weight mixing ratio was **A : B** = 1.2 : 1.

**Table 2: Example two-component compositions C1 to C3.**

| **Ingredient (weight parts)** | **C1** (Ref.) | **C2** (Ref.) | **C3** |
|---|---|---|---|
| Component **A** | | | |
| Dispersion of polymer **P1a** (50% solids) | 87.8 | 87.8 | 35.1 |
| Dispersion of Polymer **P1b** having epoxy groups (55% solids) | - | - | 52.6 |
| Dispersible polymer **P1c** | 10.9 | 10.9 | 10.9 |
| Defoamer | 0.1 | 0.1 | 0.1 |
| Tenside | 0.7 | 0.7 | 0.77 |
| Dispersing agent | 0.5 | 0.5 | 0.53 |
| TOTAL | 100 | 100 | 100 |

| Component **B** | | | |
|---|---|---|---|
| Plasticizer | 25 | 4.7 | 15 |
| Polymer **P2a1** having hydrolysable silane groups | - | 23.5 | - |
| Polymer **P2b1** having amino groups | - | - | 10 |
| Aminosilane | - | 1.4 | - |
| Hydraulic binder **H** | 75 | 70.4 | 75 |
| TOTAL | 100 | 100 | 100 |
| Weight mixing ratio **A** : **B** | 0.6 : 1 | 0.6 : 1 | 0.6 : 1 |

**Table 3: Example two-component compositions C4 to C6.**

| **Ingredient (weight parts)** | **C4** (Ref.) | **C5** (Ref.) | **C6** |
|---|---|---|---|
| Component **A** | | | |
| Dispersion of polymer **P1a** (50% solids) | 87.8 | 87.8 | 35.1 |
| Dispersion of Polymer **P1b** having epoxy groups (55% solids) | - | - | 52.6 |
| Dispersible polymer **P1c** | 10.9 | 10.9 | 10.9 |
| Defoamer | 0.1 | 0.1 | 0.1 |
| Tenside | 0.7 | 0.7 | 0.77 |
| Dispersing agent | 0.5 | 0.5 | 0.53 |
| TOTAL | 100 | 100 | 100 |

| Component **B** | | | |
|---|---|---|---|
| Plasticizer | 25 | 4.7 | 15 |
| Polymer **P2a1** having hydrolysable silane groups | - | 23.5 | - |
| Polymer **P2b1** having amino groups | - | - | 10 |
| Aminosilane | - | 1.4 | - |
| Hydraulic binder **H** | 75 | 70.4 | 75 |
| TOTAL | 100 | 100 | 100 |
| Weight mixing ratio **A** : **B** | 1.2 : 1 | 1.2 : 1 | 1.2 : 1 |

**Table 4: Example two-component compositions C7 and C8.**

| **Ingredient (weight parts)** | **C7** (Ref.) | **C8** |
|---|---|---|
| Component **A** | | |
| Dispersion of polymer **P1a** (50% solids) | 87.8 | 35.1 |
| Dispersion of Polymer **P1b** having epoxy groups (55% solids) | - | 52.6 |
| Dispersible polymer **P1c** | 10.9 | 10.9 |
| Defoamer | 0.1 | 0.1 |
| Tenside | 0.7 | 0.77 |
| Dispersing agent | 0.5 | 0.53 |
| TOTAL | 100 | 100 |

| Component **B** | | |
|---|---|---|
| Plasticizer | 4.7 | 15 |
| Polymer **P2a2** having hydrolysable silane groups | 23.5 | - |
| Polymer **P2b2** having amino groups | - | 10 |
| Aminosilane | 1.4 | - |
| Hydraulic binder **H** | 70.4 | 75 |
| TOTAL | 100 | 100 |
| Weight mixing ratio **A** : **B** | 1.2 : 1 | 1.2 : 1 |

### Test results

The test results of compositions C1 to C8 are given in Table 4.

**Table 5: Test results of the example two-component compositions C1 to C8.**

| **Test result [unit]** | **C1** (Ref.) | **C2** (Ref.) | **C3** | **C4** (Ref.) | **C5** (Ref.) | **C6** | **C7** (Ref.) | **C8** |
|---|---|---|---|---|---|---|---|---|
| Shore A hardness [-] | 61 | 88 | 84 | 65 | 95 | 97 | 92 | 94 |
| Tensile strength [MPa] | 0.99 | 2.8 | 2.02 | 1.28 | 4.3 | 4.02 | 3.5 | 7.4 |
| Elongation at break [%] | 96 | 2.3 | 2.3 | 121 | 2.9 | 2.3 | 1.8 | 1.1 |
| Tear propagation resistance [MPa] | 5.98 | 7.2 | 6.9 | 7.46 | 8.8 | 9.27 | 7.9 | 7.0 |
| Adhesion on AlMg1 | 1 | 1 | 1 | 1 | 1 | 1 | 2 | 3 |
| Adhesion on AlMg3 | 1 | 1 | 1 | 1 | 1 | 1 | 1 | 1 |
| Adhesion on Al elox. | 1 | 1 | 1 | 1 | 1 | 1 | 1 | 1 |
| Adhesion on steel | 1 | 1 | 1 | 1 | 1 | 1 | 1 | 2 |
| Adhesion on concrete | 2 | 2 | 2 | 1 | 1 | 1 | 1 | 1 |
| Adhesion on wood | 3 | 2 | 2 | 1 | 1 | 1 | 1 | 1 |

## Claims

1. A two-component composition comprising:
A) a first component **A,** comprising:
- an aqueous dispersion of at least one polymer **P1;**
B) a second component **B,** comprising:
- at least one hydraulic binder **H,**
- at least one functional compound **P2;**
wherein both components **A** and **B** are liquid or pasty and both are prepared and stored separately and mixed directly before application; and
with the proviso that the functional compound **P2** comprises functional groups that chemically react with said aqueous dispersion of said first polymer **P1** to form cross-linked and/or chain-extended polymers,
wherein said polymer **P1** comprises a polymer having epoxy groups and said functional compound **P2** comprises a compound having amino groups, and wherein the amount of said functional compound **P2** having amino groups is between 5 wt.-% and 20 wt.-%, based on component **B.**

2. The two-component composition according to claim 1, wherein said compound **P2** comprises a polymer having a polyether backbone.

3. The two-component composition according to any of the previous claims, wherein said hydraulic binder **H** comprises Portland cement, and/or aluminate cement, and/or calcium sulfoaluminate cement, and optionally calcium sulfate.

4. The two-component composition according to any of the previous claims, wherein said polymer **P1** comprises a water-dispersed (meth)acrylate homo- or copolymer and/or an ethylene-vinyl acetate copolymer.

5. The two-component composition according to any of the previous claims, wherein component **A** furthermore comprises a filler, a defoamer, a thickener, a tenside, and/or a dispersing agent.

6. The two-component composition according to any of the previous claims, wherein component **B** furthermore comprises a plasticizer and/or a silane having a primary amino group.

7. The two-component composition according to any of claims 1 to 6,
wherein component **A** comprises, based on the total weight of component **A:**
- between 10 and 50 wt.-% of a water-dispersed polymer **P1** not having epoxy groups,
- between 15 and 50 wt.-% of a water-dispersed polymer **P1** having epoxy groups,
- between 15 and 75 wt.-% of water,
- between 0 and 50 wt.-% of a filler,
- between 0 and 10 wt.-% of additives selected from defoamers, thickeners, tensides, and dispersed pigments; and
wherein component **B** comprises, based on the total weight of component **B:**
- between 5 and 20 wt.-% of a compound, in particular a polymer, **P2** having amino groups,
- between 50 and 80 wt.-% of a hydraulic binder **H,**
- between 0 and 30 wt.-% of a plasticizer,
- between 0 and 3 wt.-% of a silane having a primary amino group.

8. The two-component composition according to claim 7, wherein the water-dispersed polymer **P1** not having epoxy groups comprises an acrylate homo- or copolymer and/or a vinyl acetate copolymer.

9. A water-based cementitious sealant, coating, casting, or adhesive, obtained from mixing a two-component composition according to any of the previous claims in a mixing weight ratio of component **A** : component **B** of between 1 : 4 and 4 : 1.

10. A method for adhesively joining two substrates, the method comprising the steps of:
i) Mixing the two components of a two-component composition according to any of claims 1 to 8, preferably in a weight ratio of component **A :** component **B** of between 1 : 4 and 4 : 1,
ii) Applying the thus-obtained water-based cementitious adhesive to a first substrate to form a wet film or bead of adhesive on the first substrate, or applying the thus-obtained water-based cementitious adhesive to a first substrate and to a second substrate to form a wet film or bead of adhesive on both substrates, or applying the thus-obtained water-based cementitious adhesive into a gap between a first substrate and a second substrate to bridge the gap between the two substrates,
iii) Optionally exposing the wet film to air,
iv) Joining a second substrate to the first substrate, if necessary, such that the wet film or bead on the first substrate is in contact with the second substrate, or such that both wet films or beads on both substrates are in contact with each other, to effect bonding there between.

11. Use of a water-based cementitious sealant, coating, casting, or adhesive according to claim 9 for adhesively joining two substrates together or for coating a surface or for casting an object.

12. Dried and/or cured water-based cementitious sealant, coating, casting, or adhesive according to claim 9.

## Patentansprüche

1. Zweikomponentenzusammensetzung, umfassend:
A) eine erste Komponente **A,** umfassend:
- eine wässrige Dispersion von mindestens einem Polymer **P1;**
B) eine zweite Komponente **B,** umfassend:
- mindestens ein hydraulisches Bindemittel **H,**
- mindestens eine funktionelle Verbindung **P2;**
wobei beide Komponenten **A** und **B** flüssig oder pastös sind und beide separat hergestellt und gelagert und unmittelbar vor der Applikation gemischt werden; und mit der Maßgabe, dass die funktionelle Verbindung **P2** funktionelle Gruppen umfasst, die chemisch mit der wässrigen Dispersion des ersten Polymers **P1** reagieren, um vernetzte und/oder kettenverlängerte Polymere zu bilden, wobei das Polymer **P1** ein Polymer mit Epoxygruppen umfasst, und die funktionelle Verbindung **P2** eine Verbindung mit Aminogruppen umfasst, und wobei die Menge der funktionellen Verbindung **P2** mit Aminogruppen zwischen 5 Gew.% und 20 Gew.% liegt, bezogen auf Komponente **B.**

2. Zweikomponentenzusammensetzung nach Anspruch 1, wobei die Verbindung **P2** ein Polymer mit einem Polyethergrundgerüst umfasst.

3. Zweikomponentenzusammensetzung nach einem der vorhergehenden Ansprüche, wobei das hydraulische Bindemittel **H** Portlandzement und/oder Aluminatzement und/oder Calciumsulfoaluminatzement und gegebenenfalls Calciumsulfat umfasst.

4. Zweikomponentenzusammensetzung nach einem der vorhergehenden Ansprüche, wobei das Polymer **P1** ein wasserdispergiertes (Meth)acrylathomo- oder -copolymer und/oder ein Ethylen-Vinylacetat-Copolymer umfasst.

5. Zweikomponentenzusammensetzung nach einem der vorhergehenden Ansprüche, wobei Komponente **A** des Weiteren einen Füllstoff, einen Entschäumer, einen Verdicker, ein Tensid und/oder ein Dispergiermittel umfasst.

6. Zweikomponentenzusammensetzung nach einem der vorhergehenden Ansprüche, wobei Komponente **B** des Weiteren ein Plastifizierungsmittel und/oder ein Silan mit einer primären Aminogruppe umfasst.

7. Zweikomponentenzusammensetzung nach einem der Ansprüche 1 bis 6, wobei Komponente **A** bezogen auf das Gesamtgewicht von Komponente **A** umfasst:
- zwischen 10 und 50 Gew.% eines wasserdispergierbaren Polymers **P1,** das keine Epoxygruppen aufweist,
- zwischen 15 und 50 Gew.% eines wasserdispergierbaren Polymers **P1,** das Epoxygruppen aufweist,
- zwischen 15 und 75 Gew.% Wasser,
- zwischen 0 und 50 Gew.% eines Füllstoffs,
- zwischen 0 und 10 Gew.% Additive ausgewählt aus Entschäumern, Verdickern, Tensiden und dispergierten Pigmenten; und
wobei Komponente **B** basierend auf dem Gesamtgewicht von Komponente **B** umfasst:
- zwischen 5 und 20 Gew.% einer Verbindung, insbesondere eines Polymers **P2**, mit Aminogruppen,
- zwischen 50 und 80 Gew.% eines hydraulischen Bindemittels **H,**
- zwischen 0 und 30 Gew.% eines Plastifizierungsmittels,
- zwischen 0 und 3 Gew.% eines Silans mit zwei primären Aminogruppen.

8. Zweikomponentenzusammensetzung nach Anspruch 7, wobei das wasserdispergierte Polymer **P1,** das keine Epoxygruppen aufweist, ein Acrylathomo- oder -copolymer und/oder ein Vinylacetatcopolymer umfasst.

9. Wasserbasiertes zementartiges Dichtungsmittel, wasserbasierte zementartige Beschichtung, wasserbasiertes zementartiges Gussmaterial oder wasserbasierter zementartiger Klebstoff, erhalten aus dem Mischen einer Zweikomponentenzusammensetzung nach einem der vorhergehenden Ansprüche in einem gewichtsbezogenen Mischungsverhältnis von Komponente **A:Komponente B** zwischen 1:4 und 4:1.

10. Verfahren zum klebenden Fügen zweier Substrate, wobei das Verfahren die Schritte umfasst:
i) Mischen der zwei Komponenten einer Zweikomponentenzusammensetzung nach einem der Ansprüche 1 bis 8, vorzugsweise in einem Gewichtsverhältnis von Komponente **A:**Komponente **B** zwischen 1:4 und 4:1,
ii) Applizieren des so erhaltenen wasserbasierten zementartigen Klebstoffs auf ein erstes Substrat, um einen feuchten Film oder eine Perle aus Klebstoff auf dem ersten Substrat zu bilden, oder Applizieren des so erhaltenen wasserbasierten zementartigen Klebstoffs auf ein erstes Substrat und auf ein zweites Substrat, um einen feuchten Film oder eine Perle aus Klebstoff auf beiden Substraten zu bilden, oder Applizieren des so erhaltenen wasserbasierten zementartigen Klebstoffs in einen Spalt zwischen einem ersten Substrat und einem zweiten Substrat, um den Spalt zwischen den beiden Substraten zu verbrücken,
iii) gegebenenfalls Exponieren des feuchten Films gegenüber Luft,
iv) Fügen eines zweiten Substrats an das erste Substrat, falls erforderlich, so dass der feuchte Film oder die Perle auf dem ersten Substrat in Kontakt mit dem zweiten Substrat ist, oder so, dass beide feuchten Filme oder Perlen auf beiden Substraten in Kontakt miteinander sind, um eine Bindung zwischen ihnen zu bewirken.

11. Verwendung eines wasserbasierten zementartigen Dichtungsmittels, einer wasserbasierten zementartigen Beschichtung, eines wasserbasierten zementartigen Gussmaterials oder eines wasserbasierten zementartigen Klebstoffs nach Anspruch 9 zum klebenden Fügen zweier Substrate aneinander oder zum Beschichten einer Oberfläche oder zum Gießen eines Objekts.

12. Getrocknetes und/oder gehärtetes wasserbasiertes zementartiges Dichtungsmittel, getrocknete und/oder gehärtete wasserbasierte zementartige Beschichtung, getrocknetes und/oder gehärtetes wasserbasiertes zementartiges Gussmaterial oder getrockneter und/oder gehärteter wasserbasierter zementartiger Klebstoff nach Anspruch 9.

## Revendications

1. Composition à deux composants comprenant :
A) un premier composant A, comprenant :
- une dispersion aqueuse d'au moins un polymère P1 ;
B) un deuxième composant B, comprenant :
- au moins un liant hydraulique H,
- au moins un composé fonctionnel P2 ;
les deux composants A et B étant liquides ou pâteux et les deux étant préparés et stockés séparément et mélangés directement avant application ; et
à la condition que le composé fonctionnel P2 comprenne des groupes fonctionnels qui réagissent chimiquement avec ladite dispersion aqueuse dudit premier polymère P1 pour former des polymères réticulés et/ou étendus par une chaîne,
ledit polymère P1 comprenant un polymère ayant des groupes époxy et ledit composé fonctionnel P2 comprenant un composé ayant des groupes amino, et la quantité dudit composé fonctionnel P2 ayant des groupes amino étant comprise entre 5 % en poids et 20 % en poids, sur la base du composant B.

2. Composition à deux composants selon la revendication 1, ledit composé P2 comprenant un polymère ayant un squelette de polyéther.

3. Composition à deux composants selon l'une quelconque des revendications précédentes, ledit liant hydraulique H comprenant du ciment Portland et/ou un ciment d'aluminate, et/ou un ciment de sulfoaluminate de calcium, et éventuellement du sulfate de calcium.

4. Composition à deux composants selon l'une quelconque des revendications précédentes, ledit polymère P1 comprenant un homopolymère ou copolymère de (méth)acrylate dispersé dans l'eau et/ou un copolymère d'éthylène-acétate de vinyle.

5. Composition à deux composants selon l'une quelconque des revendications précédentes, le composant A comprenant par ailleurs une charge, un antimousse, un épaississant, un tensioactif et/ou un agent dispersant.

6. Composition à deux composants selon l'une quelconque des revendications précédentes, le composant B comprenant par ailleurs un plastifiant et/ou un silane ayant un groupe amino primaire.

7. Composition à deux composants selon l'une quelconque des revendications 1 à 6, le composant A comprenant, sur la base du poids total du composant A :
- entre 10 et 50 % en poids d'un polymère dispersé dans l'eau P1 n'ayant pas de groupes époxy,
- entre 15 et 50 % en poids d'un polymère dispersé dans l'eau P1 ayant des groupes époxy,
- entre 15 et 75 % en poids d'eau,
- entre 0 et 50 % en poids d'une charge,
- entre 0 et 10 % en poids d'additifs choisis parmi des antimousses, des épaississants, des tensioactifs et des pigments dispersés ; et
le composant B comprenant, sur la base du poids total du composant B :
- entre 5 et 20 % en poids d'un composé, en particulier d'un polymère, P2 ayant des groupes amino,
- entre 50 et 80 % en poids d'un liant hydraulique H,
- entre 0 et 30 % en poids d'un plastifiant,
- entre 0 et 3 % en poids d'un silane ayant un groupe amino primaire.

8. Composition à deux composants selon la revendication 7, le polymère dispersé dans l'eau P1 n'ayant pas de groupes époxy comprenant un homopolymère ou copolymère d'acrylate et/ou un copolymère d'acétate de vinyle.

9. Agent de scellement, revêtement, coulage ou adhésif cimentaire à base d'eau, obtenu en mélangeant une composition à deux composants selon l'une quelconque des revendications précédentes en un rapport en poids de mélange de composant A : composant B compris entre 1 : 4 et 4 : 1.

10. Procédé pour joindre de manière adhésive deux substrats, le procédé comprenant les étapes de :
i) mélange des deux composants d'une composition à deux composants selon l'une quelconque des revendications 1 à 8, préférablement en un rapport en poids de composant A : composant B compris entre 1 : 4 et 4 : 1,
ii) application de l'adhésif cimentaire à base d'eau ainsi obtenu sur un premier substrat pour former un film ou une bille humide d'adhésif sur le premier substrat, ou application de l'adhésif cimentaire à base d'eau ainsi obtenu sur un premier substrat et sur un deuxième substrat pour former un film ou une bille humide d'adhésif sur les deux substrats, ou application de l'adhésif cimentaire à base d'eau ainsi obtenu dans un espacement entre un premier substrat et un deuxième substrat pour ponter l'espacement entre les deux substrats,
iii) éventuellement exposition du film humide à de l'air,
iv) jointure d'un deuxième substrat au premier substrat, si nécessaire, de sorte que le film ou la bille humide sur le premier substrat soit en contact avec le deuxième substrat, ou de sorte que les deux films ou billes humides sur les deux substrats soient mis(es) en contact l'un(e) avec l'autre, pour effectuer une liaison entre eux (elles).

11. Utilisation d'un agent de scellement, d'un revêtement, d'un coulage ou d'un adhésif cimentaire à base d'eau selon la revendication 9 pour joindre de manière adhésive deux substrats ensemble ou pour revêtir une surface ou pour couler un objet.

12. Agent de scellement, revêtement, coulage ou adhésif cimentaire à base d'eau séché et/ou durci selon la revendication 9.
